# EUROPÄISCHE PATENTSCHRIFT

(11) **EP 1 424 512 B1**
(45) Veröffentlichungstag und Bekanntmachung des Hinweises auf die Patenterteilung: **01.08.2007**
(21) Anmeldenummer: 03022992.6
(22) Anmeldetag: 10.10.2003
(51) Int. Cl.: F16H 13/02, F16H 7/02, F02B 67/06

(54) **Von einem Riementrieb für Hilfsaggregate einer Brennkraftmaschine angetriebenes Reibradgetriebe für ein Nebenaggregat**
Accessory belt driven traction friction gearing for auxiliary drive
Transmission à roue de friction entrainée par courroie d'accessoires pour un dispositif auxiliaire

(30) Priorität: 26.11.2002 DE 10255077
(43) Veröffentlichungstag der Anmeldung: 02.06.2004
(73) Patentinhaber: Bayerische Motoren Werke Aktiengesellschaft, 80809 München (DE); Peugeot Citroen Automobiles Société Anonyme, 78140 Velizy Villacoublay (FR)
(72) Erfinder: Lemberger, Heinz, 85774 Unterföhring (DE); Wimmer, Rudolf, 4431 Haidershofen (AT)

(56) Entgegenhaltungen:
- DE-A1- 3 225 388
- DE-A1- 3 934 884
- DE-A1- 10 013 252
- DE-A1- 10 236 746

## Beschreibung

Aus der DE-A-3934884 ist einen Riementrieb mit den Merkmalen des Oberbegriffes der Anspruchs 1 bekannt.

Die Erfindung bezieht sich nach dem Oberbegriff des Patentanspruches 1 auf ein von einem Riementrieb für Hilfsaggregate einer Brennkraftmaschine angetriebenes Reibradgetriebe für ein Nebenaggregat, wobei das Reibradgetriebe ein im Umschlingungsbereich eines Triebrades der Brennkraftmaschine oder eines Hilfsaggregates mit der Außenseite des Riemens reibschlüssig zusammenwirkendes Reibrad sowie ein von diesem Reibrad reibschlüssig angetriebenes Antriebsrad des gesonderten Nebenaggregates umfasst, wobei das Reibradgetriebe ein in der Ebene des Riementriebes angeordnetes, mit der Riemenaußenseite permanent reibschlüssig angetriebenes ersten Reibrad umfasst sowie ein zum ersten Reibrad gleichachsig angeordnetes und mit dem Antriebsrad des Nebenaggregates permanent reibschlüssig in Antriebsverbindung stehendes zweites Reibrad.

Eine Anordnung wurde in der nicht vorveröffentlichten deutschen Patentanmeldung P 102 36 746 vorgeschlagen mit einer Plazierung einer Kupplung im Antriebsrad des Nebenaggregates.

Der Erfindung liegt die Aufgabe zugrunde, eine weitere Möglichkeit einer Plazierung der Kupplung in dem Reibradgetriebe aufzuzeigen, die eine zusätzliche Gestaltungsmöglichkeit des Reibradgetriebes eröffnet.

Diese Aufgabe ist mit dem Patentanspruch 1 dadurch gelöst, dass das permanent angetriebene Reibradgetriebe zum zu- und Abschalten des Nebenaggregates mit einer Kupplung ausgerüstet ist, wobei zwischen beiden axial beabstandet angeordneten Reibrädern die Kupplung angeordnet ist.

Vorteil der Erfindung ist eine größere Auswahlmöglichkeit einer für den Niederdrehzahl - und/oder Hochdrehzahl - Bereich der Brennkraftmaschine zum Antrieb des gesonderten Nebenaggregates geeigneten Kupplung vor allem im Hinblick auf die beiden gleichachsig vorgesehenen Reibräder mit unterschiedlich gewählten Durchmessern zur optimalen Drehzahlanpassung.

In Ausgestaltung der Erfindung sind als vorteilhafte Kupplungen vorgeschlagen eine schaltbare elektromagnetische Kupplung , eine hydraulische Viskositätskupplung oder eine fliehkraftgesteuerte Kupplung.

Eine bezüglich der Drehzahlabsenkung des Nebenaggregates im Hochdrehzahlbereich der Brennkraftmaschine vorteilhafte Weiterbildung einer der vorgenannten Kupplungen ist dadurch erzielt, dass die jeweilige Kupplung ab einer vorbestimmten Hochdrehzahl der Brennkraftmaschine gesteuert oder selbsttätig in einen Schlupfbetrieb übergeht, der insbesondere einer im wesentlichen konstanten Drehzahl des Nebenaggregates dient.

Im Falle eines als Wasser - bzw. Kühlmittelpumpe der Brennkraftmaschine gestalteten Nebenaggregates ist mit der schlupfgesteuerten Drehzahlanpassung eine reduzierte Leistungsaufnahme erzielt mit dem Vorteil einer Kraftstoffeinsparung.

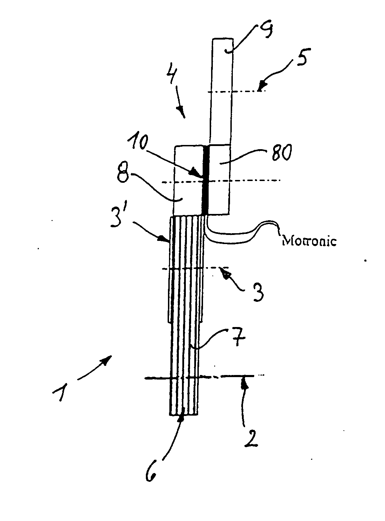

Die Erfindung ist anhand eines in einer einzigen Zeichnung schematisch dargestellten Beispiels beschrieben.

Von einem Riementrieb 1 für ein durch eine Drehachse 2 symbolisch veranschaulichtes Hilfsaggregat einer lediglich angedeuteten Brennkraftmaschine 3 ist ein Reibradgetriebe 4 angetrieben. Das Reibradgetriebe 4 umfasst ein im Umschlingungsbereich eines Triebrades 3' der Brennkraftmaschine 3 mit der Außenseite 6 des Riemens 7 reibschlüssig zusammenwirkendes Reibrad 8 sowie ein von diesem Reibrad 8 reibschlüssig angetriebenes Antriebsrad 9 eines gesondert angeordneten Nebenaggregates 5. Das permanent angetriebene Reibradgetriebe 4 ist zum Zu - und Abschalten des Nebenaggregates 5 mit einer Kupplung 10 ausgerüstet.

Wie aus der einzigen Figur ersichtlich, umfasst das Reibradgetriebe 4 erfindungsgemäß ein in der Ebene des Riementriebes 1 angeordnetes, mit der Riemenaußenseite 6 permanent reibschlüssig angetriebenes erstes Reibrad 8 sowie ein zum ersten Reibrad 8 gleichachsig angeordnetes und mit dem Antriebsrad 9 des Nebenaggregates 5 permanent reibschlüssig in Antriebsverbindung stehendes zweites Reibrad 80, wobei zwischen beiden axial beabstandet angeordneten Reibrädern 8,80 die Kupplung 10 angeordnet ist.

Als Kupplung 10 kann eine schaltbare elektromagnetische Kupplung dienen, die über einzelne Parameter der Brennkraftmaschine 3 oder über ein Kennfeld der Brennkraftmaschine 3 gesteuert ist.

Als weitere Kupplung 10 kann auch eine hydraulische Viskositätskupplung vorgesehen sein, die bei einem als Kühlmittelpumpe wirkenden Nebenaggregat 5 nach einem Kaltstart der Brennkraftmaschine 3 erst mit steigender Motorraumtemperatur in vorteilhafter Weise für eine Zuschaltung wirksam wird. Schließlich eignet sich als Kupplung 10 auch eine fliehkraftgesteuerte Kupplung, die mit Erreichen einer vorbestimmten Drehzahl der Brennkraftmaschine 3 das Nebenaggregat 5 zuschaltet.

Um eine Leistungsaufnahme des Nebenaggregates 5 durch eine gegenüber einer Hochdrehzahl der Brennkraftmaschine 3 geringere Drehzahl zu erzielen, ist jede der vorgenannten Kupplungen 10 zusätzlich derart ausgebildet, dass ab einer vorbestimmten Hochdrehzahl der Brennkraftmaschine 3 ein Schlupf erzielt ist , der insbesondere einer geringeren, konstanten Drehzahl des Nebenaggregates 5 dient.

Zusätzlich bietet die Erfindung die vorteilhafte Möglichkeit, das zweite Reibrad 80 in seinem Außendurchmesser gegenüber dem des ersten Reibrades 8 verschieden auszubilden, so dass für das Nebenaggregat 5 eine Übersetzung ins Schnelle oder ins Langsame gewählt werden kann.

Mit der Erfindung ist ein Reibradgetriebe 4 von kompakter Bauweise erreicht, wobei sowohl das riemen - bzw. antriebsseitige Reibrad 8 als auch das nebenaggregat - bzw. abtriebsseitige Reibrad 80 jeweils permanent mit dem jeweiligen Reibpartner in Eingriff steht.

## Patentansprüche

1. Von einem Riementrieb für Hilfsaggregate einer Brennkraftmaschine angetriebenes Reibradgetriebe für ein Nebenaggregat,
- wobei das Reibradgetriebe (4) ein im Umschlingungsbereich eines Triebrades (3') der Brennkraftmaschine (3) oder eines Hilfsaggregates (2) mit der Außenseite (6) des Riemens (7) reibschlüssig zusammenwirkendes Reibrad (8) sowie ein von diesem Reibrad (8) reibschlüssig angetriebenes Antriebsrad (9) des gesondert angeordneten Nebenaggregates (5) umfasst, wobei
- das Reibradgetriebe (4) ein in der Ebene des Riementriebes (1) angeordnetes, mit der Riemenaußenseite (6) permanent reibschlüssig angetriebenes erstes Reibrad (8) umfasst sowie ein zum ersten Reibrad (8) gleichachsig angeordnetes und mit dem Antriebsrad (9) des Nebenaggregates (5) permanent reibschlüssig in Antriebsverbindung stehendes zweites Reibrad (80), **dadurch gekennzeichnet, dass**
- das permanent angetriebene Reibradgetriebe (4) zum Zu - und Abschalten des Nebenaggregates (5) mit einer Kupplung (10) ausgerüstet ist,
- wobei zwischen beiden axial beabstandet angeordneten Reibrädern (8,80) die Kupplung (10) angeordnet ist

2. Reibradgetriebe nach Anspruch 1, **dadurch gekennzeichnet, dass** die Kupplung (10) eine schaltbare elektromagnetische Kupplung ist.

3. Reibradgetriebe nach Anspruch 1, **dadurch gekennzeichnet, dass** die Kupplung (10) eine hydraulische Viskositätskupplung ist.

4. Reibradgetriebe nach Anspruch 1, **dadurch gekennzeichnet, dass** die Kupplung (10) eine fliehkraftgesteuerte Kupplung ist.

5. Reibradgetriebe nach einem der Ansprüche 2 - 4, **dadurch gekennzeichnet, dass**
- jede der Kupplungen (10) zusätzlich derart ausgebildet ist, dass ab einer vorbestimmten Hochdrehzahl der Brennkraftmaschine (3) ein Schlupf erzielt ist für eine verringerte, insbesondere konstante Drehzahl des Nebenaggregates (5).

6. Reibradgetriebe nach den Ansprüchen 1 - 5,**daurch gekennzeichnet**,
- dass das zweite Reibrad (80) in seinem Außendurchmesser gegenüber dem des ersten Reibrades (8) verschieden ausgebildet ist.

## Claims

1. A friction gear for an accessory unit driven by a belt drive for auxiliary units of an internal combustion engine,
- wherein the friction gear (4) comprises a friction wheel (8) frictionally co-operating with the outside (6) of the belt (7) in the contact region of a driving wheel (3') of the engine (3) or of the auxiliary unit (2), and also comprises a driving wheel (9) frictionally driven by the friction wheel (8) for the separate accessory unit (5), wherein
- the friction gear (4) comprises a first friction wheel (8) disposed in the plane of the belt drive (1) and permanently frictionally driven by the outside (6) of the belt, and
- a second friction wheel (80) coaxial with the first friction wheel (8) and in permanent frictional drive connection with the driving wheel (9) of the accessory unit (5),
**characterised in that**
- the permanently driven friction gear (4) is equipped with a clutch (10) for connecting and disconnecting the accessory unit (5), wherein
- the clutch (10) is disposed between the two friction wheels (8, 80), which are axially spaced apart.

2. A friction gear according to claim 1, **characterised in that** the clutch (10) is a switchable electromagnetic clutch.

3. A friction gear according to claim 1, **characterised in that** clutch (10) is a hydraulic viscosity clutch.

4. A friction gear according to claim 1, **characterised in that** the clutch (10) is a gravity clutch.

5. A friction gear according to any of claims 2 - 4, **characterised in that**
- each clutch (10) is additionally constructed so that above a set high speed of the engine (3) a slip is obtained for obtaining a reduced, especially a constant, speed of the accessory unit (5).

6. A friction gear according to claims 1 **-** 5, **characterised in that**
- the second friction wheel (80) is given a slightly different outer diameter from the first friction wheel (8).

## Revendications

1. Transmission à roue à friction pour un accessoire, entraînée par une courroie d'accessoire de moteur à combustion interne, selon lequel la transmission à roue à friction (4) comporte une roue à friction (8) coopérant par friction dans la zone d'enveloppement d'une roue d'entraînement (3') du moteur à combustion interne (3) ou d'un accessoire (2), avec le côté extérieur (6) de la courroie (7), ainsi qu'une roue d'entraînement (9) de l'accessoire (5) entraînée séparément, cette roue d'entraînement étant entraînée par friction par cette roue à friction (8), la transmission à roue à friction (4) ayant une première roue à friction (8) entraînée en permanence par friction par le côté extérieur de la courroie (6) et située dans le plan de la transmission à courroie (1) ainsi qu' une seconde roue à friction (80), coaxiale à la première roue à friction (8) et coopérant par friction dans le sens de l'entraînement, en permanence avec la roue d'entraînement (9) de l'accessoire (5),
**caractérisée en ce que**
la transmission à roue à friction (4) entraînée en permanence est équipée d'un embrayage (10) pour relier ou couper l'accessoire (5),
cet embrayage (10) étant installé entre les deux roues à friction (8, 80) écartées axialement.

2. Transmission à roue à friction selon la revendication 1,
**caractérisée en ce que**
l'embrayage (10) est un embrayage électromagnétique commuté.

3. Transmission à roue à friction selon la revendication 1,
**caractérisée en ce que**
l'embrayage (10) est une transmission hydraulique.

4. Transmission à roue à friction selon la revendication 1,
**caractérisée en ce que**
l'embrayage (10) est un embrayage centrifuge.

5. Transmission à roue à friction selon l'une des revendications 2 à 4,
**caractérisée en ce que**
chacun des embrayages (10) est en outre réalisé pour qu'à partir d'une certaine vitesse de rotation maximale du moteur à combustion interne (3) on a du patinage pour avoir une vitesse de rotation réduite, notamment constante, pour l'accessoire (5).

6. Transmission à roue à friction selon les revendications 1 à 5,
**caractérisée en ce que**
la seconde roue à friction (80) est de diamètre extérieur différent de celui de la première roue à friction (8).
